(19) **Europäisches Patentamt / European Patent Office / Office européen des brevets**

(11) **EP 1 341 592 B1**

(12) **EUROPEAN PATENT SPECIFICATION**

(45) Date of publication and mention of the grant of the patent:
**04.08.2010 Bulletin 2010/31**

(21) Application number: **01981800.4**

(22) Date of filing: **24.10.2001**

(51) Int Cl.:
**B01D 29/35** (2006.01)   **B01D 29/44** (2006.01)
**D21D 5/16** (2006.01)   **B07B 1/46** (2006.01)

(86) International application number:
**PCT/US2001/032631**

(87) International publication number:
**WO 2002/034356 (02.05.2002 Gazette 2002/18)**

(54) **SCREEN CYLINDER WITH PERFORMANCE BOOSTING CONFIGURATION**

SIEBZYLINDER MIT LEISTUNGSVERBESSERNDER KONFIGURATION

CYLINDRE A TAMIS DONT LA CONFIGURATION AUGMENTE SON EFFICACITE

(84) Designated Contracting States:
**AT BE CH CY DE DK ES FI FR GB GR IE IT LI LU MC NL PT SE TR**

(30) Priority: **24.10.2000 US 242456 P**

(43) Date of publication of application:
**10.09.2003 Bulletin 2003/37**

(73) Proprietor: **Advanced Fiber Technologies (AFT) Trust**
**Sherbrooke, QC J1M 2C3 (CA)**

(72) Inventor: **FREJBORG, Frey**
**Queensbury, NY 12804 (US)**

(74) Representative: **HOFFMANN EITLE**
**Patent- und Rechtsanwälte**
**Arabellastrasse 4**
**81925 München (DE)**

(56) References cited:
| | |
|---|---|
| **WO-A-00/20091** | **WO-A-90/10110** |
| **WO-A-99/50019** | **DE-U- 9 108 129** |
| **US-A- 3 880 711** | **US-A- 3 945 920** |
| **US-A- 4 268 382** | **US-A- 5 255 790** |
| **US-A- 6 119 867** | |

**Description**

There are significant differences between the two main types of screen cylinders with slotted apertures that are used for screening cellulosic fibrous material pulp in the pulp and paper industry, namely milled screen cylinders, and screen cylinders fabricated from discrete elements, such as bars or wires. The screen cylinders formed from discrete elements, including wedge wire screen cylinders, are perceived to have higher capacity than milled screen cylinders because there is more potential open area. However conventional wedge wire screens also have significantly lower debris removal efficiency than conventional milled cylinders. For example in one test conducted between a wedge wire cylinder and a milled cylinder which had similar configurations and were manufactured by the same company, the milled cylinder had a debris removal efficiency of over 77% while the wedge wire cylinder had a debris removal efficiency of about 40%, using the same pulp furnish. In said co-pending application various techniques and procedures are illustrated and described for enhancing the functionality of wedge wire cylinders so that they more closely approximate the debris removal efficiency of the wedge wire screen cylinders compared to milled screen cylinders, including by avoiding the *Coanda effect,* and by providing a plug phenomena during the negative pulse cycle. However it has also been recognized as desirable for many years to increase the capacity of milled cylinders so that they more closely approximate that of cylinders made of discrete elements (such as wedge wire cylinders).

Now some prior art is discussed for instance WO 90/10110, wherein a milled screen cylinder is illustrated in Fig. 9 having grooves and ridges in relation to which the screen openings have been randomly positioned. The drawing shows, at least, one continuous curved surface, possibly downstream to the slot.

WO 00/20091 shows in Fig. 4 a wedge wire screen surface in detail. The drawing shows how the upstream surface 30 of the groove is planar, and the downstream surface 33 is one single surface being planar. A transition area is between the slot 15 and the downstream surface. The wedge wire includes a transition between the upstream and downstream surface, said transition includes a portion parallel to the flow direction and a sharp edge. WO 99/50019 shows in Fig. 4 a wedge wire screen surface with planar upstream and downstream surfaces. Integral spacing elements 14 are used to define the gap between adjacent screen wires.

DE 91 081 29 U shows in Fig. 2 a wedge wire screen where the wire has a symmetrically rounded top surface and in Fig. 3 the rounded top surface is replaced by stepped surfaces. According to Fig. 7 there is present a planar upstream surface perpendicular to the flow direction and an inclined downstream surface. A sharp edge defines a transition between the upstream surface and the downstream surface.

US-A-6,119,867 illustrates and teaches a milled screen cylinder including an inclined upstream surface and a downstream surface being formed by two portions inclined such that there is a concave configuration including a break between the portions. Furthermore, there is a transition between the upstream surface and the downstream surface including a portion parallel to the flow direction and a sharp edge.

According to the present invention screen cylinders, and methods of utilization and manufacture thereof, are provided which have greatly enhanced utility compared to conventional milled and discrete element screen cylinders. For example according to the present invention it has been found that even compared to commercial screen cylinders with popular contours (such as those sold by CAE Screen Plates and known as the "D-PROFILE"TM) may greatly increase capacity while maintaining at least as good debris removal efficiency [capacity enhancement is not worthwhile if it results in significant debris removal efficiency loss] by making seemingly very minor changes in the configuration of the grooves at the slots.

As a matter of fact milled cylinders can be so improved by practicing the present invention that a milled cylinder with smaller slots can have a higher capacity than a conventional wedge wire cylinder with larger slots, something considered impossible in the prior art. However the invention is not limited to improvements in milled cylinders, but also can significantly enhance the performance of wedge wire, or other discrete element, cylinders, i.e. the debris removal efficiency of discrete element screen cylinders can be improved dramatically.

The effect on capacity with the present invention increases as slot sizes get smaller and decreases as slots get larger. The invention is not expected to have any significant effect at slot sizes above 1 mm, but the invention has a dramatic effect for slot sizes below 1 mm, and especially between about .05-.5 mm (and all narrower ranges within that broad range). The general goal in screening is increasingly to use the smallest possible slots for the highest possible debris removal efficiency. The constraining factor is loss of capacity and other operational problems if slots are too small. The present invention will allow further decreases in slot sizes than was possible before.

Exactly what theory explains the highly advantageous results that can be achieved according to the present invention is not presently well understood. With respect to discrete element cylinders, it is believed that the elimination of the *Coanda effect,* compared with a funneling type action adjacent the slot, are responsible, but exactly how the funneling action adjacent the slot creates the favorable flow conditions that achieve the desired results according to the present invention is not presently well understood.

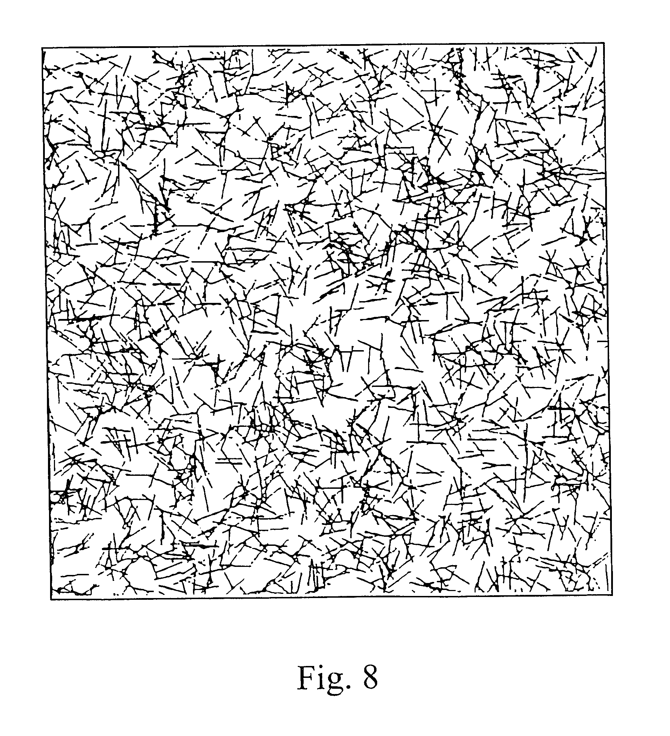

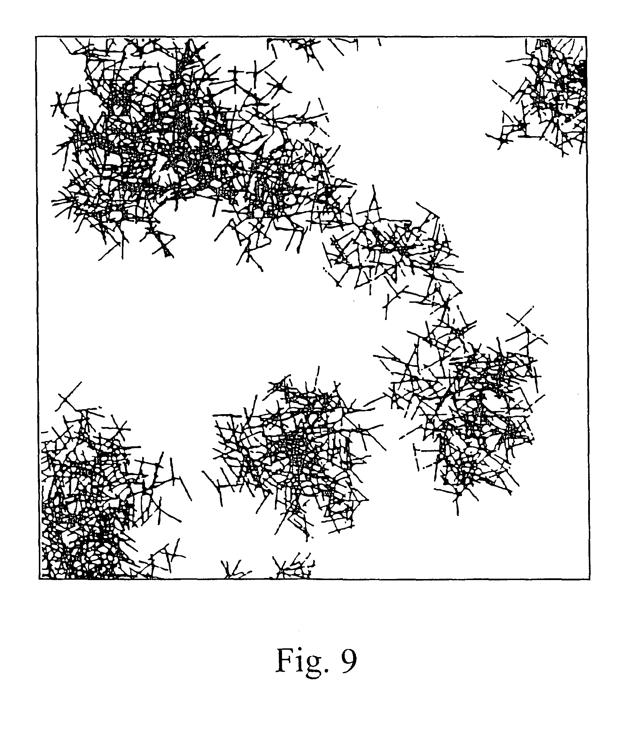

Something that may explain the advantageous results according to the present invention is the ability of the invention to deal with fiber floes. While those in the art have a tendency to consider that the fiber stock being screened has homogeneously distributed fibers, such as illustrated two dimensionally in FIGURE 8 (the real fibers and flocs are three dimensional), in fact typically floes of fibers are formed in the stock slurry, as illustrated in FIGURE 9. To put the floc formation into a practical perspective; if a certain type of fiber will form flocs at one percent consistency within 100 micro-seconds, at three percent consistency only 10 micro- seconds may be needed to form a floc. It is believed that the particular contour of the cylinders according to the present invention de-flocculates the clusters into individual fibers separated by a film of water, If the fibers are not deflocculated (fluidized), especially smaller slots and sharp edges or slot entrances with radiuses that are too small, will make it difficult for "intact" flocs to enter the slot. Then the flocs will be rejected as debris while the water portion between the flocs passes into the accepts, causing thickening of the rejects, and rejecting good fibers. It is believed that with the construction according to the invention it is considerably easier to guide flocs toward the narrow slot openings where they gradually become compressed in the smaller slot section. The friction force created between the compressed fiber floes and the side walls inside the slots can now be overcome, as the slot entrance remains "open" instead of being plugged with flocs of fibers. With an unplugged or "open" slot entrance it is then possible for the pressure drop over the screen cylinder, combined with small positive pulses from the rotation of the rotor foil or protrusion leading edges, to effectively push the compressed flocs out from the narrow slots into the relief grooves on the accepts side.

Another potential advantage of the construction according to the invention is the enhanced debris removal efficiency. With small slots and long fibers, conventional modem screening operations using, for example, OCC secondary fibers have to compromise between efficiency and fractionation (rejecting) the valuable long fibers. In order not to fractionate out the valuable long fibers it is necessary to operate the screens with fairly high passing velocities in the slots, which creates a high push/pull type force on the fibers (or flocs) in the slots, keeping them from moving into the accepts. However in order to have good efficiency and debris removal it is generally accepted that the passing velocity in the slots has to be fairly low as higher passing velocities have a detrimental affect on efficiencies. However the constructions according to the invention allow the screen cylinders to be operated with lower passing velocities in the slots, without increased fractionation of long fibers.

According to the invention, a screen cylinder is designed according to claim 1.

The cylinder may be made from a plate with the grooves milled and the slots cut therein, or alternatively, may be made from a plurality of bars or wires mounted so that they are substantially parallel to each other, defining the grooves and slots therebetween.

In the bars or wires context, substantially each of the bars or wires preferably includes a transition between the upstream and downstream surface thereof, wherein the transition includes a portion substantially parallel to the flow direction and a substantially sharp edge between the upstream surface and the transition. Moreover, substantially each bar or wire preferably includes a transition between the upstream and downstream surface thereof contoured so that turbulence is formed at the slot and so as to substantially avoid the *Coanda effect* at the slot.

The downstream surface is convex including a clearly defined break between the first and second portions thereof, and the slots preferably have a substantially uniform width of between about .05 mm - .5 mm.

Grooves of the wedge wire screen cylinder have a sloped downstream surface, an upstream surface making an angle of about 70-110 degrees with respect to the flow direction. The screen cylinder may have slots about. 17 mm wide, or an equivalent, when screening TMP has greater capacity and at least about 30% less shives in the accepts compared to the wedge wire screen cylinder which has. 15 mm slots, or an equivalent. In another arrangement, the screen cylinder may have slots about. 15 mm wide, or an equivalent, has substantially the same operating characteristics at typical average passing velocities of 1.5-2 m/s in the slots as the wedge wire screen cylinder which has. 9 mm slots, or an equivalent, when screening CTMP at a consistency of about 1.5%, or the equivalent.

In yet another exemplary embodiment of the invention a screen cylinder having a screening surface and an accepts surface on opposite faces thereof is provided for screening pulp flowing in a flow direction to separate accepts from rejects. The screen cylinder includes a plurality of grooves defined in the screening surface generally transverse to the flow direction and each including an upstream surface and a downstream surface; a slot defined in each of at least a plurality of the grooves ; and the screen cylinder grooves and slots being contoured so that the cylinder includes a transition between the upstream and downstream surfaces thereof contoured so that turbulence is formed at the slot and so as to substantially avoid the *Coanda effect* at the downstream/upstream transition area, and define a funnel at the slot improving at least one of capacity or debris removal efficiency while not adversely affecting the other of capacity or debris removal efficiency, and substantially de-flocculating the pulp.

## BRIEF DESCRIPTION OF THE DRAWINGS

These and other aspects and advantages of the invention will be described in detail with reference to the accompanying drawings, in which:-

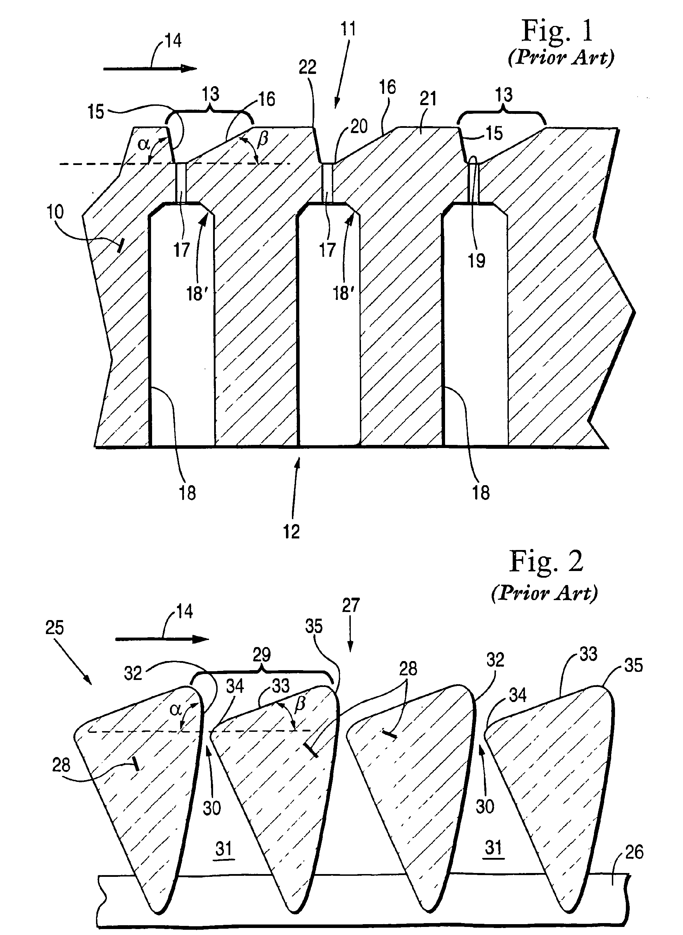

FIGURES 1 and 2 are greatly enlarged schematic cross-sectional views of an exemplary milled cylinder contour, and wedge wire cylinder contour, respectively, according to the prior art:

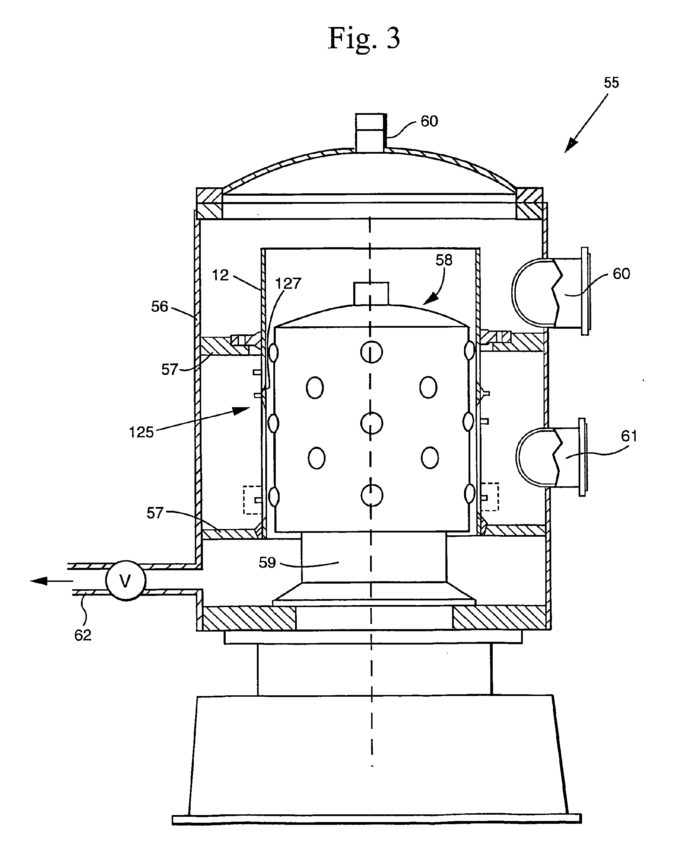

FIGURE 3 is a longitudinal cross-sectional view showing the screen cylinder of the invention in a pressure screen for normal operation;

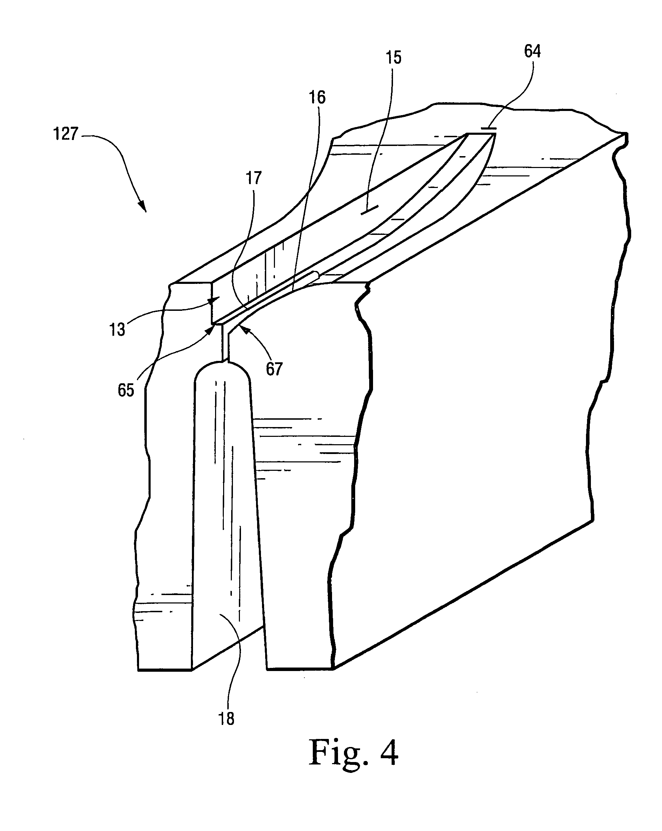

FIGURE 4 is a detailed schematic perspective view showing the configuration of the screen surface of a cylinder according to the invention, and particularly one groove and slot therein;

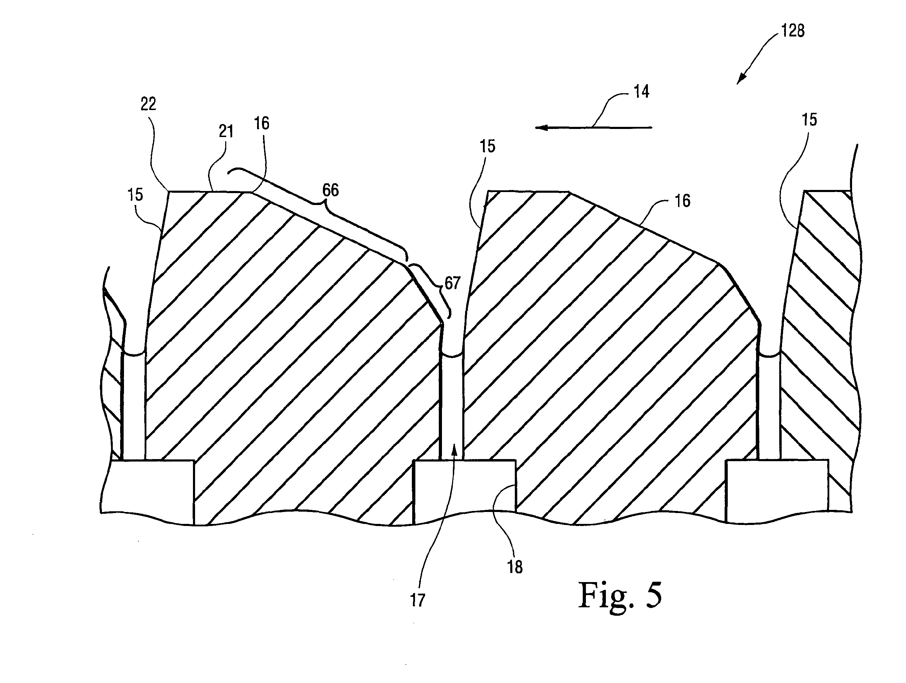

FIGURE 5 is a drawing based on an impression of an actual screen cylinder according to the present invention:

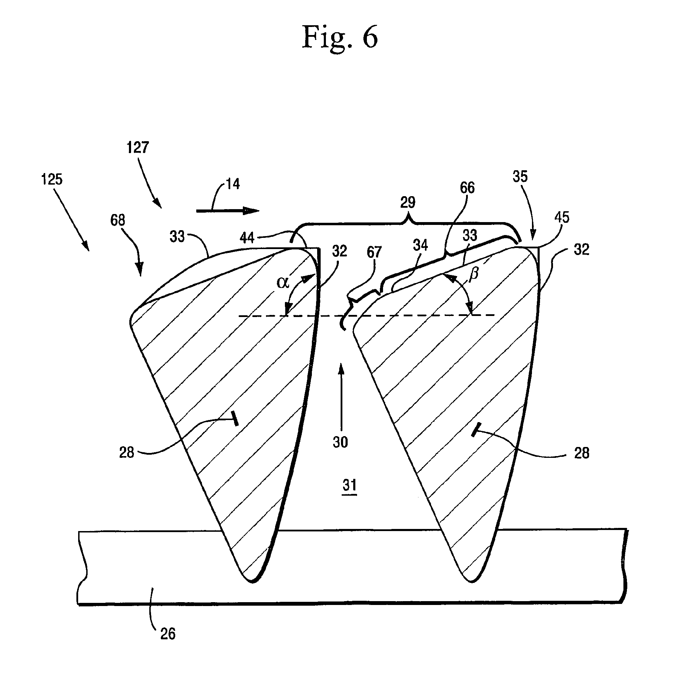

FIGURE 6 is a view like that of FIGURE 2 only showing the wires or bars making up the screen cylinder contoured so as to obtain the advantageous results according to the claimed invention:

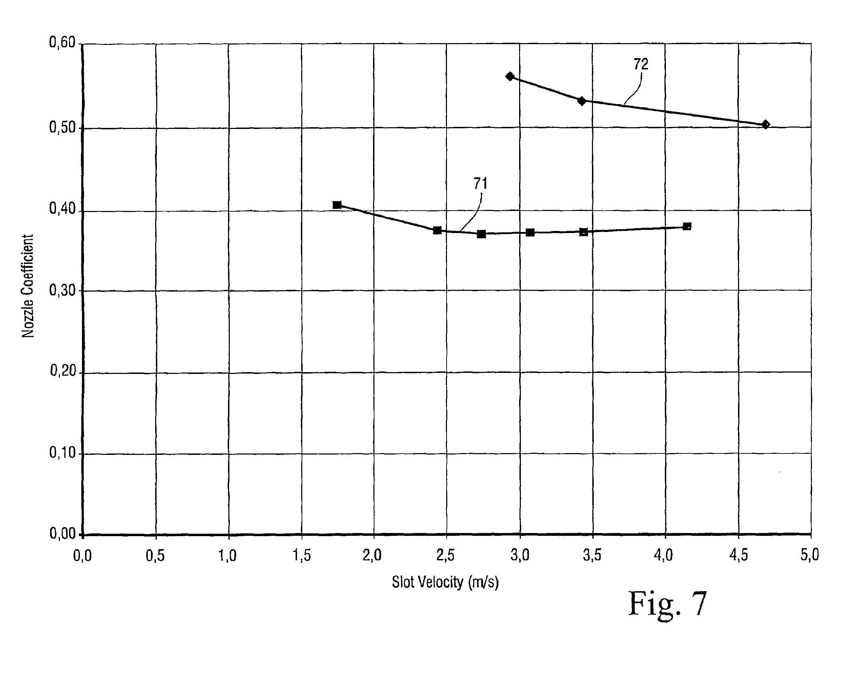

FIGURE 7 is a plot of nozzle coefficient versus slot velocity showing a much higher nozzle coefficient that is obtained according to the present invention compared to conventional wedge wire screen cylinders:

FIGURE 8 is a schematic two-dimensional representation of substantially uniformly distributed fibers in a pulp suspension: and

FIGURE 9 is a two-dimensional representation of a more realistic fiber suspension than in FIGURE 8. showing fibers formed into flocs.

## DETAILED DESCRIPTION OF PREFERRED EMBODIMENTS

FIGURE 1 schematically illustrates a cross sectional configuration (greatly enlarged for clarity of illustration) of an exemplary high debris efficiency removal screen cylinder contour, such as shown in U.S. Patents 4,529,520, 5,524,770, and 5,607,589, the disclosures of which are incorporated by reference herein. Commercial versions of this screen cylinder are sold by CAE ScreenPlates Inc. of Glens Falls, New York under the trademark "PROFILE®". The screen cylinder contour illustrated in FIGURE 1 is milled into a piece of metal, and comprises a cylinder body 10 having a screening surface 11 and an accepts surface 12. Normally, the surface 11 is on the interior of the cylinder 10, but may be on the exterior.

The screening surface 11 comprises a plurality of grooves 13 provided in repeating patterns along the surface 11 and preferably substantially completely covering the screening surface 11. The grooves 13 are substantially transverse to the general tangential flow direction 14 of cellulose pulp being screened. The grooves 13 may extend substantially the entire length (height) of the cylinder 10, or more typically are interrupted at various points along the cylinder 10 by load bearing bands.

Each of the grooves 13 is formed by an upstream (with respect to the tangential direction of pulp flow 14) surface 15, and a downstream surface 16. The surface 15 is substantially perpendicular to the flow direction 14 (e.g. preferably has an angle $\alpha$ of between about 70-110°, e.g. about 85°), and the downstream surface 16 is sloped over at least a majority of the extent thereof, preferably having an angle $\beta$ of between about 5-60° (e.g. about 15°-30°, most preferably about 15-25°). A screening slot 17 is defined between the surfaces 15, 16, opening up into an enlarged opening (relief slot, groove, or opening) 18 providing communication between the surfaces 11, 12. The screening slots 17 have the width thereof as the critical dimension, that is a dimension parallel to the general flow path 14; typical widths for the slots 17 are .002-.024 inches, e.g. between about .05-.5 mm. A slot 17 may take up the entire transition of the surfaces 15, 16 to each other at the bottom of the groove 13, or a substantially flat (not sloped) continuation of the downstream surface 16 may be provided in which the groove 17 is formed. In any event, each of the grooves 13 often has a substantially sharp edge portion 19 at the upstream edge of the screening slot 17, and another substantially sharp edge portion 20 at the downstream edge of the screening slot 17. If not substantially perpendicular to the envelope surface, the portion 19, or a transition surfaces between elements 15 and 17, may be formed by an approximately 45° chamfered or curved-surface milling tool.

Further, the surface 11 typically is also defined by an upper transition 21 between adjacent surfaces 15, 16. The transition 21 preferably includes a portion substantially parallel to the tangential flow direction 14 of the pulp, and also includes a substantially sharp edge 22. By "substantially sharp edge" is meant an edge having no radius of curvature, or a radius of curvature of less than about .3 mm, and one which avoids the *Coanda effect.* The configuration of the relief opening 18 (particularly at the portion 18' thereof) provides a plug phenomena, preventing excess reverse flow of fibers during negative pulsing.

In the operation of the screen cylinder 10, either the screen cylinder is rotated so that it moves in the tangential direction 14, or the screen cylinder 10 remains fixed while the pulp is moved in the tangential direction 14 (e.g. with a conventional rotor). In the case of a rotating cylinder the arrow 14 would be indicating the relative speed of the suspension. The typical desired velocity of the pulp as it passes through the slots 17 is about 1.5-2.0 m/sec. but may be between .7-4.0 m/sec. In any event, pulp enters each of the grooves 13 and because of the contour thereof, the pulp is subjected to micro turbulence, so that a very high percentage of the debris in the pulp flowing in direction 14 is removed, that is precluded from passing through the slot 17, while the desired pulp fibers do pass through the slot 17. Utilizing the slotted screen cylinder 10 as illustrated in FIGURE 1, it is not unusual to get debris removal efficiencies of 75% or greater.

FIGURE 2 is a view like that of FIGURE 1 only showing a conventional wedge wire screen cylinder, shown generally by reference numeral 25, and including a screen cylinder frame 26 and having a screen surface shown generally by reference numeral 27. The wedge wire screen cylinder 25 is formed of a plurality of discrete elements, as opposed to the milled configuration for the screen 10. That is, the screen surface 27 is defined by a plurality of metal bars or wires 28, which are adhesively, by mechanical locking, by welding, or a combination thereof, attached to the frame 26. The frame 26 comprises a plurality of widely spaced rings. The bars or wires are cut to axial cylinder lengths in mechanical locking or welded designs and when of resistance welded wedge wire style, the wires are continuous and wrapped around supports 26. Both of these techniques are conventional.

Like the milled screen cylinder 10, the general contour of the bars or wires 28 simulates a plurality of grooves 29, slots 30 opening up into a wide volume 31, with the slots 30 defined between substantially perpendicular (i.e. angle $\alpha$ about 70-110°) upstream surface 32, and a downstream surface 33 having an angle $\beta$ of about 5-60° (e.g. 5-40°, or 10-30°), in both cases the angles $\alpha$, $\beta$ being measured with respect to the tangential pulp flow direction 14.

While the wedge wire screen cylinder 25 attempts to generally simulate the milled contour of screen cylinder 10, because of the configuration of the bars or wires 28 typically used, and their mounting in the rings 26, there are no substantially sharp edges, such as provided at 19, 20, and 22 in the milled screen 10 of FIGURE 1. Rather, the upstream surface 32 is substantially continuously and slightly curved or flat, extending from the groove simulation 29 into the open area 31, while the edges 34, 35 at the transitions between adjacent surfaces 32, 33 at both the closest point to the slot 30 and the furthest point from the slot 30 are typically rounded (having a radius of more than .3 mm for the edge 34), e.g. not substantially sharp edges. Because of this configuration the screen cylinder 25 suffers from the *Coanda effect,* allowing a greater amount of debris than desired to enter slots 30. Even if a substantially sharp edge is provided, however, such as schematically illustrated in U.S. patent 5,255,790, no substantially flat surface (compared to the tangential movement of the pulp 14) is provided at the transition 35.

Despite the fact that the conventional wedge wire cylinders 25 have a similar contour to the milled screen cylinders 10, and often have a greater capacity, the debris removal efficiency of the wedge wire cylinders 25 (at comparable operating conditions) is much lower than for the milled cylinders 10. For example, in one test in which a milled cylinder 10 and a wedge wire cylinder 25 made by the same company and having similar contours (such as schematically illustrated in FIGURES 1 and 2) were tested using substantially the same furnish and other relevant conditions, the milled cylinder 10 had a debris removal efficiency of over 77%, while the wedge wire screen cylinder 25 had a debris removal efficiency of about 40%.

A screen cylinder according to the present invention is shown schematically at 125 in FIGURE 3, having a screening surface 127, and schematically illustrates the screen cylinder 125 in association with a pressure screen 55 of conventional design, including a housing 56 in which the screen cylinder 125 is mounted. In this embodiment the cylinder 125 is essentially stationary, and is mounted on the stationary mounting element 57 within the housing 56. Mounted within the screen cylinder 125 is a foil or rotor 58 which is rotated about a substantially vertical axis defined by the shaft 59 so that there is relative movement between the screening surface 127 and the foil or rotor 58 causing the pulp to flow (in direction 14) past the screen surface 127 to separate accepts from rejects, e.g, at a passing velocity of between about .7-4.0 m/scc., preferably between about 1.5-2.0 m/sec. Alternatively or in addition, the cylinder 125 can be rotated about the axis of a shaft.

The housing 56 includes an inlet 60 for the pulp, an accepts outlet 61, for pulp that has passed through the screen slots, and a rejects outlet 62 for reject material does not pass through the screen 125.

FIGURE 4 schematically illustrates a portion of the screening surface 127, of a screen cylinder 125 according to the invention, that has a milled configuration where a groove 13 terminates, as illustrated at 64. Even with the enlargement provided in the schematic representation of FIGURE 4, however, it is difficult to see the seemingly minor, but extraordinarily effective and important, modification of a contour of the groove 13 adjacent the slot 17 that achieves the desired results according to the present invention, such as the surface 67 from FIGURE 5. In the FIGURE 4 embodiment a small surface 65 is provided adjacent the upstream surface 15; the surface 65 may or may not be provided. The typically 0.1-0.5 mm side surface 65 is not necessarily desirable but may occur when machining slots out of plates and having difficulties with indexing the tools. The slots 13 with surface 65 can be produced by milling, water-jet cutting, laser cutting, etc. In FIGURE 5 the magnification is great enough to more clearly illustrate the change in contour according to the invention.

According to the invention, as illustrated in FIGURE 5, the downstream surface 16 (which may be curved or substantially planar - the substantially planar version illustrated in FIGURE 5) has a first portion 66 most remote from the slot 17, and a second portion 67 adjacent the slot 17. The portion 67 has a much greater angle with respect to the tangential flow direction 14 than does the portion 66. For example in the preferred embodiment the portion 66 has an angle that is roughly about 5-40°, preferably about 10-30°, most preferably about 15-25° with respect to the tangential flow direction 14, while the second portion 67 (which may be substantially flat, or curved to a predetermined radius greater than .3 mm) has an angle to the tangential flow direction 14 that is at least 10° greater than the angle of the portion 66, and typically is about 45-80° (e.g. about 2-5 times as great as the angle of the portion 66). The second portion 67 thus provides essentially a "funneling" action adjacent the slot 17 which apparently increases the capacity of the screen cylinder 125 according to the invention without adversely affecting the debris removal efficiency. In FIGURE 5 a flat surface 21 is shown, but is not essential, and becomes less essential as angle β in FIGURES 1 and 2 is below 15°.

To demonstrate the highly advantageous results according to the invention, the screen cylinder 125 of FIGURE 5, which is a modified form of a conventionally milled cylinder in accordance with the teaching for slotted cylinders in the U.S. '520 Profile® patent and manufactured by CAE ScreenPlates Inc. of Lennoxville, Quebec, Canada, was tested in comparison to an unmodified conventional milled Profile® cylinder, except for surface 67, as illustrated in FIGURE 4. This evaluation was done in a pressurized small laboratory screen called a CSS-screen. This laboratory screen uses 50 mm wide coupons with ten slots in each coupon, which are curved in order to operate with a foil rotor in a 286 mm diameter chamber. The lab screen is highly useful in making relative comparisons, but the results cannot be scaled up to commercial size screens. The results of this testing are set forth in Table I below.

**TABLE I**

| | | Slot Velocity (m/s) | Pressure Drop | Accept Pressure | Accept Consistency | Measured Capacity |
|---|---|---|---|---|---|---|
| I | 1000 rpm | 0.57 | 0.52 | 6.73 | 0.53 | 15.0 |
| | BackPressure (BP) | 0.53 | 0.37 | 11.71 | 0.57 | 15.2 |
| | 1500 rpm | 0.70 | 0.87 | 11.68 | 0.51 | 17.9 |
| | BP | 0.59 | 1.00 | 16.93 | 0.57 | 17.1 |
| II | 1000 rpm | 0.47 | 0.46 | 6.96 | 0.48 | 11.1 |
| | BP | 0.43 | 0.52 | 10.83 | 0.53 | 11.4 |
| | 1500 rpm | 0.66 | 1.36 | 11.98 | 0.49 | 16.0 |
| | BP | 0.68 | 1.14 | 13.65 | 0.47 | 15.8 |
| | | | | | | |
| III | 1000 rpm | 1.06 | 0.32 | 7.58 | 0.66 | 30.3 |
| | BP | 1.00 | 0.46 | 11.10 | 0.66 | 28.6 |
| | 1500 rpm | 1.61 | 0.61 | 13.58 | 0.71 | 49.8 |
| | BP | 1.58 | 0.84 | 16.30 | 0.74 | 50.7 |

In Table I, test batteries I and II are with the same coupon of the conventional Profile® style similar to that illustrated in FIGURE 4, whereas the coupon in test battery III has the configuration of FIGURE 5, according to the invention. The fundamental difference between these two coupons is the provision of the second portion 67 as illustrated in FIGURE 5 of the drawings. What these results show is that by providing the funneling portion 67 according to the present invention the measured capacity is approximately doubled, yet there is no significant adverse affect on debris removal efficiency.

The invention does not achieve its desired results solely in milled cylinders, but also in wedge wire or other discrete element cylinders. One such cylinder is schematically illustrated in FIGURE 6. The bars or wires 28 of the screen cylinder 125 seen in FIGURE 6 have the same configuration as that of FIGURE 2 except the transition 35 between the surfaces 32, 33 (that is the furthest point from the slot 30 in a direction perpendicular to the tangential flow direction 14) has a short substantially planar surface 44 substantially parallel to the flow direction 14, and with a substantially sharp edge 45. This substantially avoids the *Coanda effect* at the slot 30. While in FIGURE 6 for clarity of illustration the surface 44 is shown as flat and the edge 45 is completely sharp, in actuality there will be a slight rounding, but much less than in the prior art of FIGURE 2, and substantially avoids the *Coanda effect.*

Also in FIGURE 6, according to the invention, the downstream surface 33 of the "groove" 29 is configured so as to provide the following effect. For the right hand wire 28 in FIGURE 6, there are two distinct portions of the surface 33, 66, 67, substantially as illustrated in FIGURE 5 for the milled cylinder. However for the left hand bar 28 in FIGURE 6, the surface 33 is substantially convex rather than substantially flat as illustrated for the right hand bar, but has a portion 68 there that makes an angle, or has an average tangent making an angle, that is about 45-80° to the flow direction 14, and provides a funneling effect. A worn out cylinder (or unused) contour as illustrated in FIGURE 2 can be modified or rebuilt by for instance a grinding or machining processes, to the same configuration as illustrated in FIGURES 5 and 6. Pre-machining drawn wires to eliminate the undesirable, typical rounded edges, prior to cylinder assembly, can also accomplish the configuration in FIGURES 5 and 6.

For both the embodiments of FIGURES 5 and 6, one good measure of the effectiveness of the operation of the screen cylinder 125 according to the invention is what is known as the nozzle coefficient, or sometimes known as the discharge coefficient, and is represented by the designation "C". In fluid dynamics the approximate discharge through an orifice or nozzle is determined according to the following equation which uses C:

$$Q = 19.636\, C d_1^2 \sqrt{h}\; \sqrt{\frac{1}{1-\left(\dfrac{d_1}{d_2}\right)^4}}\; where\; \frac{d_1}{d_2}\; is\; greater\; than\; 0.3$$

$$Q = 19.636\, C d_1^2 \sqrt{h}\; where\; \frac{d_1}{d_2}\; is\; less\; than\; 0.3$$

$Q$ = flow, in gpm
$d_1$ = dia of orifice or nozzle opening, inches
$h$ = differential head at orifice, in feet of liquid
$d_2$ = dia of pipe in which orifice is placed, inches
$C$ = discharge coefficient

The nozzle or discharge coefficient C varies depending upon the fluid (water, or pulp with a certain level of solids consistency) and the particular configuration of the nozzle or orifice. For example using water as the fluid, the following coefficients C are provided for the conventional structures: short re-entrant tube, .52; sharp-edged orifice .61; square edged tubular area, 61; long re-entrant tube, .73; square edged long re-entrant tube, .82; well rounded orifice, .98.

Having the coefficient C in mind, tests were performed to evaluate the invention, as illustrated in FIGURE 5, compared to a conventional wedge wire screen cylinder which has a sloped downstream surface, an upstream surface making an angle of about 70-110°, e.g. about 70-90°, with respect to the flow direction 14, and a rounded transition between the upstream and downstream surfaces. The following are conditions and results of that test:

Pressure Screen:  *Bird M-200*
Screen Cylinders:  *0.15 mm Milled Screen Cylinder per invention 0.20 mm conventional wedge wire*
Flow Conditions:  Accept Flow = *2500 lpm,* Reject Rate = *10%*
Feed Pulp:  *Spruce-Pine-Fir CTMP, CSF = 170, Consistency = 1.5% Fibre Length = 1.75 mm*

**TABLE II**

|  | Invention | Wedge Wire |
|---|---|---|
| Open Area (dm$^2$) | 1.43 | 2.41 |
| Slot (Passing) Velocity (m/s) | 2.91 | 1.73 |
|  |  |  |
| Accept Consistency | 1.13 | 1.11 |
| Accept Average Fibre Length | 1.63 | 1.66 |
| Capacity (OD tons/day) | 40.7 | 40.0 |
| Pressure Drop (kPa/PSI) | 13.5/2.0 | 9.0/1.3 |
| Motor Load (kW) | 40.9 | 43.1 |
|  |  |  |
| Maximum Accept Flow (lpm) | ~4000 | ~6000 |
| Motor Load @Max Flow | 44.9 | 51.8 |

Unfortunately the CTMP pulp used for the tests in Table II is well screened and contains very few shives, therefore it was not worthwhile to try and evaluate shive removal efficiencies between the two different screen cylinders, but it is known that the screening efficiency of the cylinder according to the invention would have been much greater. What the test did clearly, and very surpisingly, show is that a milled cylinder with 0.15 mm slots could operate at the normal commercial production rate of this screen of about 40 ADMT/D. This rate was substantially the same as (and in fact even slightly greater than) a wedge wire cylinder with 0.2 mm slots, despite the fact that normally the larger the slots the greater the capacity, and the wedge wire configuration typically has greater capacity than a milled cylinder configuration. That is, the milled cylinder according to the invention, as illustrated in FIGURE 5, despite the fact that it had 25% smaller slots and 40% less open area still had substantially the same (even slightly greater) capacity than the conventional wedge wire screen. During the testing pulp was sampled at 2500 liters per minute accept flow rate. After sampling the flow rate was pushed to its maximum value at a volumetric reject rate of 10%. The wedge wire screen cylinder had approximately 50% more maximum volumetric capacity than the milled screen cylinder according to the invention.

In the testing represented in Table II. the wedge wire screen with 20 mm slots was operated at a normal commercial production rate of about 40 ADMT/D; this rate corresponds to an average passing velocity (see line 2 of Table 11) of 1.73 m/5 for the wedge wire cylinder (also the starting point for graph 71 in FIGURE 7). The milled cylinder operated with a pressure drop that was 50% higher than for the wedge wire slot. According to fluid mechanics theory, this would cause one to expect an increase in slot velocity of about 22%. However, the observed increase in slot velocity shown in Table 11 was over 68%, which attests to the superior performance of the invention operating under the noted conditions.

The testing done as described above with respect to Table II can be plotted as nozzle coefficient versus slot velocity as illustrated in FIGURE 7. In the plot of FIGURE 7 the graphical representation 71 is for the .2 mm wedge wire screen cylinder, while the graphical representation 72 is for the .15 mm milled cylinder according to the invention. The nozzle coefficient shows the ability of each screen to transfer pressure drop into slot velocity. Slot velocity has a strong fluctuating component but is dominated by a net value through the screen cylinder. The plots in FIGURE 7 indicate that the screen cylinder according to the invention is more efficient in creating passing velocity from the pressure drop.

These tests show that according to the present invention a screen cylinder (whether milled or made from discrete screen elements) has slots with a nozzle or discharge coefficient C of at least 10% greater than the conventional wedge wire screen cylinder, and typically the co-efficiency is about 25-50% greater, with substantially the same debris removal efficiency. That is the coefficient C is greater than about 0.5 when the velocity flow of pulp through the slots is between about 1.5-5.0 m/s, at least for CTMP with a consistency between .8-5%, particularly of about 1.5%.

Other testing was also performed to demonstrate the advantages of the invention. This testing was done using TMP (thermo-mechanical pulp) which has a very small shive (mini-shive) which is notoriously difficult to screen out. Several batteries of comparable tests were done with a conventional wedge wire screen cylinder with 0.15 mm slots and the same contour depth as a milled cylinder according to the invention as illustrated in FIGURE 5, but the milled cylinder had larger slots (0.17 mm). The milled cylinder according to the invention had greater capacity and at least about 30% (typically about 30-40%) less shives (including mini-shives) in the accepts. This indicated a much greater debris removal efficiency despite the fact that the capacity was greater. This testing would have proportional results for proportional changes in the slots of the cylinders.

The screen cylinders according to the present invention are not only advantageous in the direction of accept flow, as described above, but also have important advantages during the instantaneous back-flushing negative pulse cycles. According to the invention there is a slight redirection of the negative pulse in the downstream direction, moving shives away from the vicinity of the slot 17, 30 opening. Also, when in a negative pulse cycle the configuration of the slot entrance with the funnel shape will now become the exit end for the high speed, intensive reverse flow. Due to the funnel sections favorable nozzle coefficient for the reverse flow, it will result in less resistance and higher volumetric flow and speed in the slot and at the same pulse energy, increasing the unplugging force and bringing more dilution to the screening zone.

The invention also results in enormous advantages in the manufacture of milled screen cylinders. In the conventional manufacture of screen cylinders, the slots are cut with cutters that are so thin that they may be less than the thickness of a conventional piece of copy paper, and therefore are easy to break. In the typical manufacture of a screen cylinder such as illustrated in FIGURE 1, around five or more cutters will be broken during the manufacturing process. However because of the more forgiving nature of the funneling contour of the portion 67 according to the invention, cutter breakage is much less common. As a matter of fact in the manufacture of one relatively large screen plate ultimately curved into a screen cylinder such as illustrated in FIGURE 5, not one single cutter was broken, which would have been unheard of and essentially impossible when used in making a conventional construction such as illustrated in FIGURE 1. The service length of the number of cuts per cutter (useful life) can be increased at least 20% (e.g. about 100%) according to the invention, and/or can improve productivity and can operate with percentage-wise higher feeds.

**EP 1 341 592 B1**

**Claims**

**1.** A screen cylinder (125) having a screening surface (127, 128) and an accepts surface on opposite faces thereof, for screening pulp flowing in a tangential flow direction (14) to separate accepts from rejects, comprising

a plurality of grooves (13, 29) defined in said screening surface generally transverse to said flow direction;

a slot (17, 30) defined in each of at least a plurality of said grooves; and

each said groove having an upstream curved or substantially planar surface (15, 32), and a downstream surface (16, 33) having a first curved or substantially planar portion (66) thereof remote from said slot defining an angle that is about 5-40 degrees with respect to said flow direction, and a second curved or substantially planar portion (67) thereof adjacent said slot defining an angle that is about 45-80 degrees with respect to said flow direction,

wherein said downstream surface is substantially convex, and

wherein there is a clearly defined break in said downstream surface between said first and second portions thereof.

**2.** A screen cylinder as recited in claim 1, wherein said cylinder comprises a cylinder made from a plate with said grooves (13) milled and said slots (17) cut therein.

**3.** A screen cylinder as recited in claim 1, wherein said cylinder comprises a cylinder made from a plurality of bars or wires (28) mounted so that they are substantially parallel to each other, defining said grooves and slots therebetween.

**4.** A screen cylinder as recited in claim 3, wherein substantially each said bar or wire includes a transition surface (35) between an upstream (33) and downstream surface (32) thereof, and wherein said transition surface includes a portion (44) substantially parallel to said flow direction and a substantially sharp edge (45) between said upstream surface of said bar or wire and said transition surface.

**5.** A screen cylinder as recited in claim 1, 2, 3 or 4, wherein said slots have a substantially uniform width of between about .05 mm - .5 mm.

**6.** A screen cylinder as recited in any one of claims 1 to 5, wherein said first portion of said downstream surface defines an angle that is about 10-30 degrees with respect to said flow direction.

**7.** A screen cylinder as recited in any one of claims 1 to 6, wherein grooves of the wedge wire screen cylinder have a sloped downstream surface and an upstream surface making an angle of about 70-110 degrees with respect to said flow direction.

**8.** A screen cylinder as recited in claim 1 or 2, wherein a transition surface (21, 35) between adjacent upstream and downstream surfaces (15, 16, 32, 33) of said screening surface includes a portion (21, 44) substantially parallel to said flow direction and a substantially sharp edge (22, 45) between said upstream surface and said transition surface.

**Patentansprüche**

**1.** Siebzylinder (125), der eine Sieboberfläche (127, 128) und eine Annahmeoberfläche an ihrer gegenüberliegenden Fläche aufweist, für das Aussieben von Zellstoff, der in einer Tangentialflussrichtung (14) fließt, um die Annahme vom Ausschuss zu trennen, umfassend

eine Vielzahl von Nuten (13, 29), die in der Sieboberfläche im Wesentlichen quer zu Flussrichtung definiert sind;

ein Langloch (17, 30), das in jeder der zumindest einen Vielzahl von Nuten definiert ist; und

wobei jede der Nuten eine vorgelagert gekrümmte oder im Wesentlichen ebene Oberfläche (15, 32) und eine nachgelagerte Oberfläche (16, 33) aufweist, die einen ersten gekrümmten oder im Wesentlichen ebenen Abschnitt (66) entfernt von dem Langloch aufweist, das einen Winkel definiert, der etwa 5-40 Grad in Bezug auf die Flussrichtung ist, und einen zweiten gekrümmten oder im Wesentlichen ebenen Abschnitt (67) aufweist, der zu dem Schlitz benachbart ist, der einen Winkel definiert, der etwa 45-80 Grad in Bezug auf die Flussrichtung ist,

wobei die nachgelagerte Oberfläche im Wesentlichen konvex ist, und

wobei es einen klar definierten Bruch in der nachgelagerten Oberfläche zwischen ihren ersten und zweiten Abschnitten gibt.

**2.** Siebzylinder nach Anspruch 1, bei dem der Zylinder einen Zylinder umfasst, der aus einer Platte mit aus ihr ausgefrästen Nuten (13) und in sie eingeschnittenen Schlitzen (17) hergestellt ist.

**3.** Siebzylinder nach Anspruch 1, bei dem der Zylinder einen Zylinder umfasst, der aus einer Vielzahl von Stäben oder Drähten (28) hergestellt ist, die so montiert sind, dass sie im Wesentlichen parallel zueinander sind, und dabei die Nuten und Schlitze zwischen sich definieren.

**4.** Siebzylinder nach Anspruch 3, bei dem im Wesentlichen jeder der Stäbe oder Drähte eine Übergangsoberfläche (35) zwischen seiner vorgelagerten (33) und nachgelagerten Oberfläche (32) beinhaltet, und wobei die Übergangsoberfläche einen Abschnitt beinhaltet, der im Wesentlichen parallel zur Flussrichtung ist und eine im Wesentlichen scharfe Kante (45), die zwischen der vorgelagerten Oberfläche der Stäbe oder Drähte und der Übergangsoberfläche liegt.

**5.** Siebzylinder nach einem der Ansprüche 1, 2, 3 oder 4, bei dem die Schlitze eine im Wesentlichen gleichförmige Breite von etwa 0,05 mm - 0,5 mm aufweisen.

**6.** Siebzylinder nach einem der Ansprüche 1 bis 5, bei dem der erste Abschnitt der nachgelagerten Oberfläche einen Winkel definiert, der etwa 10-30 Grad in Bezug auf die Flussrichtung aufweist.

**7.** Siebzylinder nach einem der Ansprüche 1 bis 6, bei dem die Nut des Keildrahtsiebzylinders eine geneigte nachgelagerte Oberfläche und eine vorgelagerte Oberfläche aufweisen, die einen Winkel von etwa 70-110 Grad in Bezug auf die Flussrichtung erzeugen.

**8.** Siebzylinder nach einem der Ansprüche 1 oder 2, bei dem eine Übergangsfläche (21, 35) zwischen den benachbarten vorgelagerten und nachgelagerten Oberflächen (15, 16, 32, 33) der Sieboberfläche einen Abschnitt (21, 44) umfasst, der im Wesentlichen parallel zur Flussrichtung ist und eine im Wesentlichen scharfe Kante (22, 45) zwischen der vorgelagerten Oberfläche und der Übergangsoberfläche liegt.


**Revendications**

**1.** Cylindre de tamis (125) ayant une surface de criblage (127, 128) et une surface d'acceptés sur des faces opposées de celle-ci, pour cribler une pâte s'écoulant dans une direction d'écoulement tangentielle (14) pour séparer des acceptés de rejets, comprenant
une pluralité de rainures (13, 29) définies dans ladite surface de criblage, globalement transversales par rapport à ladite direction d'écoulement ;
une fente (17, 30) définie dans chacune d'au moins une pluralité desdites rainures ; et
chaque dite rainure ayant une surface amont courbe ou sensiblement plane (15, 32), et une surface aval (16, 33) ayant une première partie courbe ou sensiblement plane (66) de celle-ci distante de ladite fente définissant un angle qui fait environ 5 à 40 degrés par rapport à ladite direction d'écoulement, et une seconde partie courbe ou sensiblement plane (67) de celle-ci adjacente à ladite fente définissant un angle qui fait environ 45 à 80 degrés par rapport à ladite direction d'écoulement,
dans lequel ladite surface aval est sensiblement convexe, et
dans lequel il y a une rupture clairement définie dans ladite surface aval entre lesdites première et seconde parties de celle-ci.

**2.** Cylindre de tamis selon la revendication 1, dans lequel ledit cylindre comprend un cylindre fait à partir d'une plaque, lesdites rainures (13) étant fraisées et lesdites fentes (17) étant découpées en son sein.

**3.** Cylindre de tamis selon la revendication 1, dans lequel ledit cylindre comprend un cylindre fait à partir d'une pluralité de barres ou de fils (28) montés de sorte qu'ils sont sensiblement parallèles les uns aux autres, définissant lesdites rainures et fentes entre ceux-ci.

**4.** Cylindre de tamis selon la revendication 3, dans lequel sensiblement chaque dite barre ou fil inclut une surface de transition (35) entre une surface amont (33) et une surface aval (32) de celui-ci, et dans lequel ladite surface de transition inclut une partie (44) sensiblement parallèle à ladite direction d'écoulement et une arête sensiblement vive (45) entre ladite surface amont de ladite barre ou fil et ladite surface de transition.

**5.** Cylindre de tamis selon la revendication 1, 2, 3 ou 4, dans lequel lesdites fentes ont une largeur sensiblement uniforme entre environ 0,05 mm à 0,5 mm.

**6.** Cylindre de tamis selon l'une quelconque des revendications 1 à 5, dans lequel ladite première partie de ladite surface aval définit un angle qui fait environ 10 à 30 degrés par rapport à ladite direction d'écoulement.

**7.** Cylindre de tamis selon l'une quelconque des revendications 1 à 6, dans lequel des rainures du cylindre de tamis à fils profilés ont une surface aval inclinée et une surface amont faisant un angle d'environ 70 à 110 degrés par rapport à ladite direction d'écoulement.

**8.** Cylindre de tamis selon la revendication 1 ou 2, dans lequel une surface de transition (21, 35) entre des surfaces amont et aval adjacentes (15, 16, 32, 33) de ladite surface de criblage inclut une partie (21, 44) sensiblement parallèle à ladite direction d'écoulement et une arête sensiblement vive (22, 45) entre ladite surface amont et ladite surface de transition.

Fig. 1
*(Prior Art)*

Fig. 2
*(Prior Art)*

# Fig. 3

Fig. 4

Fig. 5

EP 1 341 592 B1

# Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9010110 A
- WO 0020091 A
- WO 9950019 A
- DE 9108129 U
- US 6119867 A

- US 4529520 A
- US 5524770 A
- US 5607589 A
- US 5255790 A